# EUROPEAN PATENT APPLICATION

(11) **EP 4 717 425 A1**
(43) Date of publication of application: **01.04.2026**
(21) Application number: 24203628.3
(22) Date of filing: 30.09.2024
(51) Int. Cl.: B29B 17/02, B29B 17/04, C08J 11/26

(54) **METHOD OF RECYCLING A COMPONENT INVOLVED IN PRODUCING A WIND TURBINE BLADE OR A COMPONENT THEREOF BY VACUUM INFUSION MOLDING**

(71) Applicant: Siemens Gamesa Renewable Energy A/S, 7330 Brande (DK)
(72) Inventor: Ischtschuk, Lars, 9200 Aalborg (DK); von Dungern, Friedrich, 9000 Aalborg (DK)
(74) Representative: SGRE-Association

(57) **Abstract**

It is described a method of recycling a component (4, 7, 8) involved in producing a wind turbine blade or a component thereof by vacuum infusion molding, wherein the component (4, 7, 8) has been contaminated with an epoxy resin during the vacuum infusion molding. The method comprises a recycling stage with steps of separating the component (4, 7, 8) from a plurality of components involved in the manufacture of a blade of a wind turbine, wherein the separated component (4, 7, 8) is or comprises a recyclable thermoplastic or recyclable thermoset, shredding the separated contaminated component (4, 7, 8), contacting the shredded contaminated component (4, 7, 8) with a heated, acidic aqueous liquid for a predetermined period of time, so that the epoxy resin is at least partly dissolved and precipitated from a remainder of the shredded component (4, 7, 8), and using the remainder of the component (4, 7, 8) as a recycled material.

## Description

### Field of invention

The present invention relates to a method of recycling a component involved in producing a wind turbine blade or a component thereof by vacuum infusion molding. For example, the component can be an infusion distribution mesh.

The production of alternative energies, especially electricity, is becoming increasingly important in terms of resource conservation and the reduction of CO₂ inputs into the environment. The generation of electricity from wind turbines is playing an increasingly important role in the generation of renewable energies. The wind power is transmitted through rotor blades to an electricity-generating nacelle and then forwarded to households or industry. Since suitable locations on land (on-shore) are limited and the wind does not blow steadily, the turbines have been set up in the sea (off-shore).

The wind turbines can be built there much larger than on land, which has also constantly increased the length of the rotor blades. The rotor blades are constructed from glass and carbon fibres, including foam and balsa wood reinforcements as core materials, and are then impregnated with epoxy resin by vacuum infusion and then cured. Due to the process, a not inconsiderable amount of waste is also generated there, which is still mainly not recycled, but thermally recycled.

After an operating or service life of 20 to 25 years, the blades can no longer withstand the constant load of the wind and must be replaced, sometimes even earlier. Until now, these blades have been shredded and used, for example, as filler material or for cement production. Some of these blades are also deposited on land (landfill). For this reason, investigations are made to recover and recycle the raw materials used to build the blades. Previous processes were based on the high-energy, thermal decomposition (pyrolysis) of the thermoplastics used (plastics such as foams, plastic attachments) and the used resins (thermosets) to obtain so-called pyrolysis oil that can be used for new plastics. Other processes are based, for example, on the decomposition of plastics and resin by very aggressive solvents. These processes are very complex and environmentally questionable.

Rotor blades and a large variety of composite parts for wind turbines are produced by vacuum infusion. Various auxiliary materials are used to ensure stable and reproducible infusion processes and to guarantee a good resin distribution to all cavities as well as the right flow speed. These materials are produced from different thermoplastics and have usually a significant resin uptake. After the infusion process, they are disposed after curing and demoulding and then incinerated. Under the aspects of sustainability, the waste of composite production often leads to a negative assessment, even if the core product convinces due to a long-life expectation, emission reduction or higher efficiency caused by weight saving.

The running costs are high as the auxiliary materials are disposable materials which results in high running costs, and their incineration produces CO₂.

For example, such vacuum infusion auxiliary material can be an infusion distribution mesh which is removed and disposed after the composite part is finished. The implementation and removal of the auxiliary materials and especially the distribution mesh is time and cost intensive.

So far, the high energy density of the mentioned waste, which can be yield by incineration, the challenging material separation and the non-recyclability of conventional epoxy resins makes the waste attractive for energy and heat production by incineration but has a negative effect on the CO₂-footprint of the product.

### Summary of the invention

There may be a need for reducing the CO₂-footprint in producing part of a wind turbine by a method, which is also easier to handle and more sustainable. This need may be met by the subject matters according to the independent claim. The present invention is further developed as set forth in the dependent claims.

According to an aspect of the invention, a method of recycling a component involved in producing a wind turbine blade or a component thereof by vacuum infusion molding is provided. The component of the device for vacuum infusion molding has been contaminated with epoxy resin which is used during the vacuum infusion molding. The method comprising a recycling stage with steps of: separating the component from a plurality of components involved in the manufacture of a blade of a wind turbine, wherein the separated component is or comprises a recyclable thermoplastic or recyclable thermoset; shredding the separated contaminated component; contacting the shredded contaminated component with a heated, acidic aqueous liquid for a predetermined period of time, so that the epoxy resin is at least partly dissolved and precipitated from a remainder of the shredded component; and using the remainder of the component as a recycled material.

In the context of the present invention, the term "component" can refer to a physical part or hardware involved in the manufacture of the blade, or to a chemical component involved in the manufacture of the blade, for example an amount of a cured epoxy resin.

In the context of the present invention, the step of shredding the contaminated component can comprise crushing, chopping, cutting, milling, grinding and/or rolling the contaminated component.

The great advantage of using the production residues is that only materials such as thermoplastics and epoxy resin are processed in the process. The use of residual thermoplastic has the advantages that it could be used in a complete material cycle and that some process steps can be omitted during subsequent recycling. Problematic substances such as fillers, paint, fibre residues and fibre sizing, balsa wood and foams, thermoplastics and metallic components are not included here. Further advantageously, in the present invention, the auxiliary materials are not incinerated so that the CO₂-footprint is remarkably enhanced. In addition, the auxiliary materials in turn can be made from the recycled material so that the running costs, in particular material costs, can be reduced, too. As a further benefit, the amount of waste material can be reduced.

Instead of prior art resin-hardener combinations used so far, an epoxy resin can be used, in which the hardener can be split by a mild acetic acid, making it easy to separate and recycle the materials that are bound together. In contrast to conventional processes, the epoxy resin can also be reused as it is converted into a thermoplastic that has chemical groups on the surface that have a high affinity for epoxy resin groups. This offers many advantages, because this thermoplastic shall have a higher binding force to epoxy resins than conventional thermoplastics and can also be dissolved in acetic acid more later. This property opens previously impossible applications in the use of thermoplastics in combination with epoxy resins.

The method basically includes two material flows by recycling two different kinds, i.e., a recycling of cured resin and auxiliary materials used in the blade production, and a recycling of end-of-life rotor blades. The first example enables the direct use of production residues and the specific use of recycled epoxy resin, while the recycling of rotor blades relies on a long-term strategy.

In an embodiment, after the step of contacting the shredded contaminated component with the heated, acidic aqueous liquid, the remainder of the component is filtered to separate the remainder of the component, in particular thermoplastic components, and an acidic epoxy resin solution. This filtering step is optional.

In an embodiment, after at least partly dissolving and precipitating the epoxy resin, the resulting acidic epoxy resin solution or acidic aqueous liquid is neutralized and residual thermoplastics from cracked epoxy resin are removed therefrom. The neutralized solution can undergo an aftertreatment so that the after-treated solution can preferably be added to the acidic solution obtained from the filtering step.

In an embodiment, the remainder of the component or the residual thermoplastics obtained from the neutralization step undergoes at least one of an aftertreatment, granulating with packing, and reusing.

In an embodiment, the recycled material comprises at least one epoxy-functional group and/or is compatible with at least one epoxy-functional group. Thermoplastics are not compatible with thermoset resins and could lead to matrix failures under cyclic loads. A solution is achieved by the recycled material as residual thermoplastic material which could be received when the original thermoset material is dissolved in a mild acid. The recycled thermoset is in comparison to conventional thermoplastics affine to the epoxy matrix because of epoxy compatible groups and/or groups which are reactive towards epoxy. These specific characteristics would allow to melt the thermoplastic and to cast a flow/distribution mesh, for example an infusion distribution mesh, or to produce any other component.

In an embodiment, the acidic aqueous liquid comprises an acid and is heated at a temperature in a range of from 30° to 100°C, preferably from 70°C to 100°C, and/or for a period of from 0,1 h to 10 h, preferably from 1 h to 10 h. The epoxy resin can be well dissolved and precipitated from the remainder of the shredded component. In an embodiment, the acid comprises at least one selected from the group consisting of acetic acid, lactic acid, citric acid, oxalic acid and tartaric acid. The epoxy resin can be well dissolved and precipitated from the remainder of the shredded component.

In an embodiment, the step of contacting the shredded contaminated component with a heated, acidic aqueous liquid for a predetermined period of time can comprise placing the shredded contaminated component in a bath of an acidic aqueous liquid. Alternatively, the shredded contaminated component to be recycled may also be sprayed or contacted in another way with an acidic aqueous liquid comprising an acid.

In an embodiment, the acidic aqueous liquid has a pH value of less than 7, in particular of less than 6, in particular of less than 5, in particular of less than 4. Moreover, the acidic aqueous liquid may have a pH value of more than 0, in particular of more than 1.

In an embodiment, the acid is preferably an organic acid or a carboxylic acid, rather than a mineral acid. An organic acid or a carboxylic acid may not only be particularly suitable for adjusting an appropriate pH but may additionally also act as a solvent for the recyclate.

In an embodiment, the acid comprises a monocarboxylic acid, a dicarboxylic acid, a tricarboxylic acid and/or a polycarboxylic acid, in particular selected from the group consisting of acetic acid, lactic acid, citric acid, oxalic acid and tartaric acid. Combinations of two or more of these acids are suitable as well. In particular, the acid may comprise acetic acid, which has proven particularly suitable.

In an embodiment, the shredded contaminated component to be recycled is contacted with an acidic aqueous liquid comprising an acid (e.g., 20 to 30% acetic acid) at a temperature in a range of from 30°C to 100°C, preferably from 70°C to 100°C, more preferred from 80°C to 90°C, and/or for a period of from 0.1 h to 10 h, preferably from 1 h to 10 h, more preferred from 3 h to 6 h.

In an embodiment, the shredded contaminated component to be recycled comprises or is made of a resin containing a cleavable functional group, in particular at least one of an acetal and a ketal functional group. As a result of the contacting step, at least component of the cleavable functional groups of the resin of the shredded contaminated component are cleaved such that the cleaved resin gets (becomes) dissolved in the acidic aqueous liquid. Simultaneously, the shredded contaminated component can be made of compound having a chemical structure which dissolves in the acidic aqueous liquid and may form a substantially homogenous blend or mixture with the cleaved resin enabling a recovery of the compound.

In an embodiment, the contaminated component is one of an infusion distribution mesh, an infusion resin inlet, a vacuum plug, an infusion channel, a spiral hose, a tube adaptor, a line connector, a profile, a vacuum line, and a part of the blade, so that most components of the auxiliary materials are recycled, and the waste amount of material is remarkably reduced.

In an embodiment, the recycled material is used for a component of a device for vacuum infusion molding for producing a wind turbine blade or a component thereof, in particular one of an infusion distribution mesh, an infusion resin inlet, a vacuum plug, an infusion channel, a spiral hose, a tube adaptor, a line connector, a profile, a vacuum line, of for a blade. Advantageously, a substantially closed material cycle can be achieved with further remarkably reduced waste of material.

In an embodiment, the recycled material is used for one of fiber spinning, extruding of channels or profiles, 3D-printing, and casting a flow/distribution mesh, for example an infusion distribution mesh. The spinned fibers are preferably used as a yarn for an infusion distribution mesh.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
- Fig. 1: shows a cross-sectional view of a device for vacuum infusion molding according to an embodiment;
- Fig. 2: shows a flowchart of a method of recycling a component involved in producing a wind turbine blade or a component thereof by vacuum infusion molding according to an embodiment;
- Fig. 3: shows examples of components of a device for vacuum infusion molding, which can be recycled;
- Fig. 4: shows a graph of residual thermoplastic from epoxy recycling and of an expected demand for residuals to produce components of a device for vacuum infusion molding.

### Detailed Description

The illustrations in the drawings are schematically. It is noted that in different figures, similar or identical elements are provided with the same reference signs.

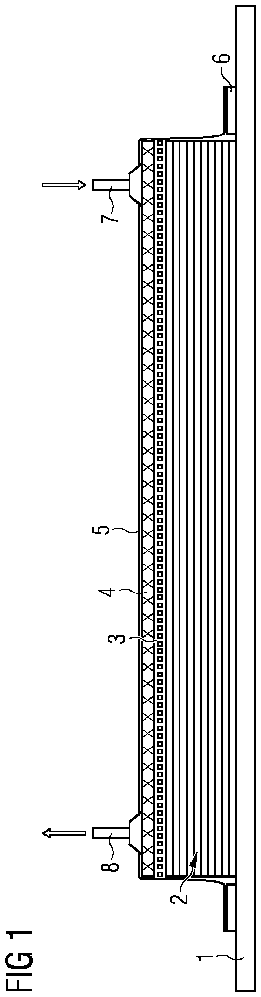

**Fig. 1** shows a cross-sectional view of a device for vacuum infusion molding according to an embodiment. A to be build composite part can be a wind turbine blade or a part thereof, and it comprises a composite stack 2 which is placed on a mold 1 and then covered with a release fabric 3. The release fabric 3 helps to remove the other infusion materials after curing of the composite stack 2 and can realize a defined surface roughness. An infusion distribution mesh 4 is placed between the release fabric 3 and a vacuum foil 5. The vacuum foil 5 is used to build a vacuum bag which is sealed with a sealing tape 6 on the mold 1. An applied vacuum through a vacuum plug 8 realizes that a liquid epoxy resin will flow through a resin inlet 7, which is arranged opposite to the vacuum plug 8, into an inside the whole composite stack 2. The composite stack 2 will be saturated by the infused epoxy resin, which originally is a monomer and becomes a polymer after subsequent curing so that a firm composite part is produced, i.e., the wind turbine blade or the part thereof.

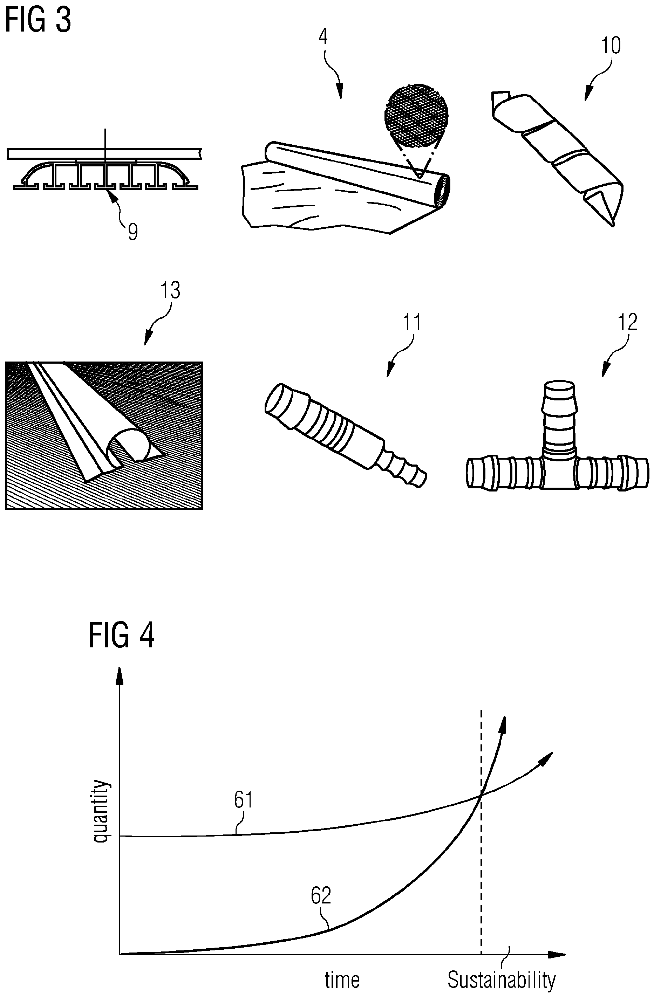

Omega-infusion channels formed by an omega-profile 13 (see Fig. 3) or other infusion channels can be used to achieve a fast and high resin flow. The resin inlet 7 can be connected to a resin manifold which can comprise a spiral wrap or spiral hose 10 (see Fig. 3). The vacuum plug 8 can be connected to a vacuum manifold which can also comprise a spiral wrap or spiral hose 10.

After producing the composite part by infusion molding, the release fabric 3, the distribution mesh 4, the vacuum foil 5, the sealing tape 6, the infusion resin inlet 7 and the vacuum plug 8 are contaminated by the infused and cured epoxy resin. Apart from these components which are only examples, there are many other components which could be contaminated by the infused epoxy resin during infusion molding, and some can likewise be recycled by the method in accordance with the present invention.

The most common method in the production of to be build composite parts or fibre composite components is to insert glass and/or carbon layers, including foam and balsa wood reinforcements and beams (a main load-bearing element in the rotor blade), insert resin distribution media (the mesh 24), resin distribution channels and other auxiliary materials, and then assemble with the vacuum bag, for example including a tacky tape of butyl rubber. The resin-hardener mixture is then sucked into the component under negative pressure (vacuum) and afterwards cured at a high temperature.

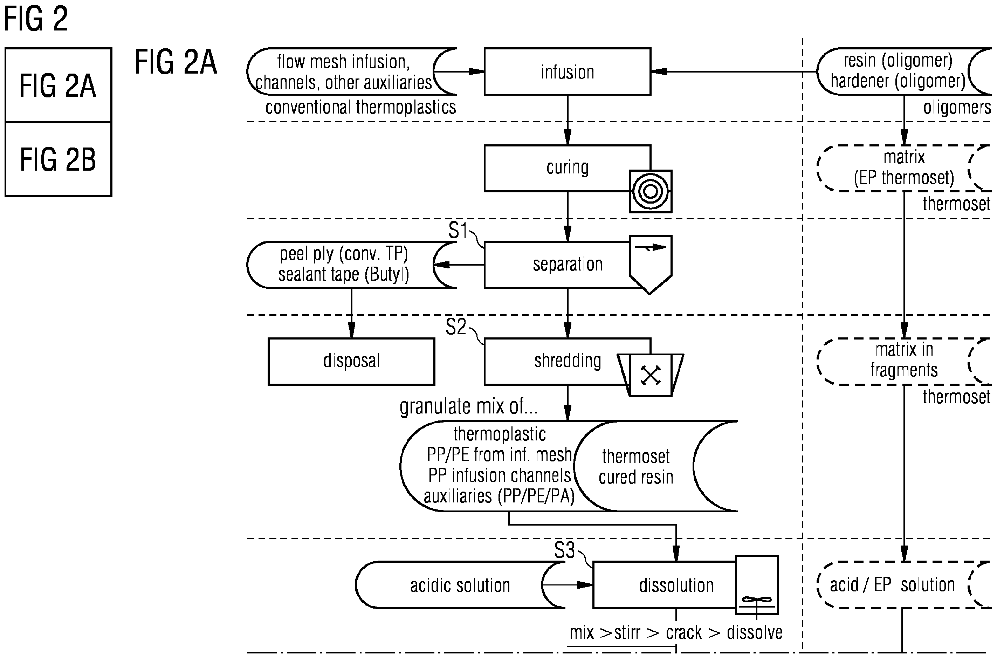

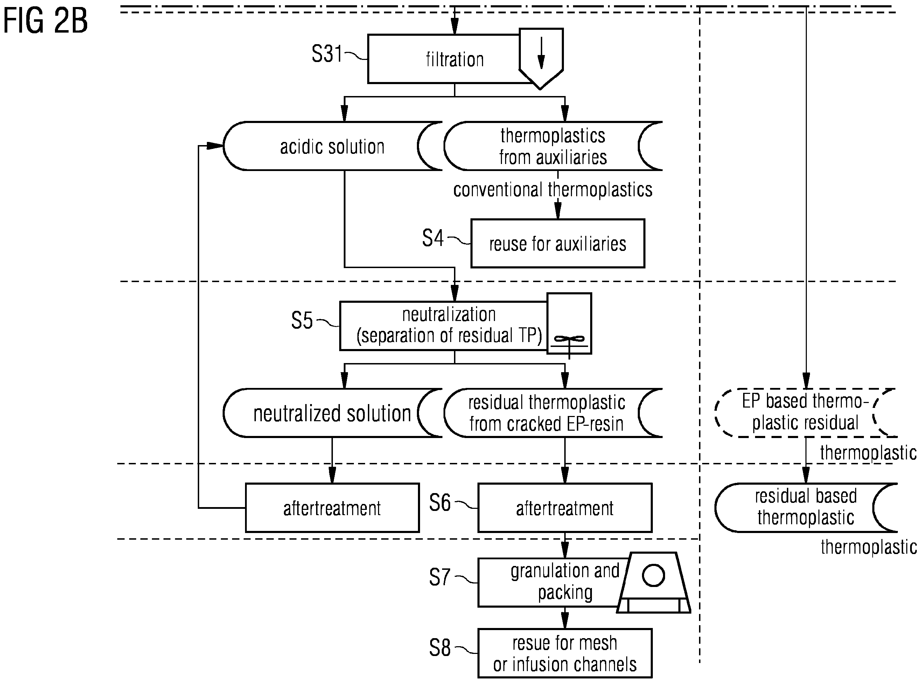

After curing, the auxiliaries are removed from the blade and normally disposed by incineration thermally in the prior art. However, the present invention removes the auxiliaries and separates/sorts them for example by substance classes. After infusion and curing, the auxiliaries are removed from the blade and can be processed further in accordance with Fig. 2.

**Fig. 2** shows a flowchart of a method of recycling a component 4, 7, 8 involved in producing a wind turbine blade or a component thereof by vacuum infusion molding according to an embodiment. Before carrying out a step S1, the vacuum infusion molding has been performed, where for example the distribution mesh 4, an infusion channel 9 (see Fig. 3) and other auxiliaries are used. After the infusion of the epoxy resin as an oligomer, the same is cured by use of a hardener as an oligomer. The cured epoxy resin is a thermoset matrix.

The method comprises a first recycling stage with the step S1 of separating the component 3, 4, 5, 6, 7, 8 from a plurality of components involved in the manufacture of a blade of a wind turbine, wherein the separated component 3, 4, 5, 6, 7, 8 is or comprises a recyclable thermoplastic or a recyclable thermoset. The recyclable thermoplastic can comprise for example resin distribution or infusion channels 9 of PP, supply or vacuum lines of elastomers/PU, the line connector 12 of PP/PE/PA, the mesh 24 of PE/PP. If the contaminated component is a part of the blade, it can be a PET foam or an attachment, etc. The recyclable thermoset comprises the cured epoxy resin.

Components, which cannot be recycled by the method of the present invention, are removed. These can be the release fabric 3 (or peel ply) made of conventional thermoplastics, for example polyester, the sealing tape 6 made of Butyl, the vacuum foil 5, etc. If the contaminated component is a part of the blade as such, it can also comprise glass fibres, carbon fibres, balsawood, metallic materials, a surface filler, or a paint. These non-recyclable components can be disposed.

The method further comprises a step S2 of shredding the separated contaminated component 4, 7, 8. The resulting product is a matrix in fragments, which fragments comprise for example the thermoset cured epoxy resin and thermoplastics of PP/PE from the mesh 4, PP from the infusion channel 9 and some PP/PE/PA from other auxiliaries. The resin distribution channels including the distribution mesh 4, connection- and manifold pieces such as the infusion resin inlet 7, the vacuum plug 8, the infusion channel 9, the spiral hose 10, the tube adaptor 11, the line connector 12, and the profile 13 are shredded together to be able to store the leftovers in a more space-saving manner. These shredded residues can be stored, for example, in big packs and then taken to an external recycling station. The shredded material is not classified in this step and shredding is also necessary to be able to dissolve the contained epoxy resin more quickly in a following step. If necessary, the shredded material can be shredded further in the external recycling station.

The method further comprises a step S3 of contacting the shredded contaminated component 4, 7, 8 with a heated, acidic aqueous liquid for a predetermined period of time, so that the epoxy resin is at least partly dissolved and precipitated from a remainder of the shredded component 4, 7, 8.

The shredded contaminated component 4, 7, 8 can be poured into a reactor, where is also added thirty percent acetic acid. The reactor can be heated and is equipped with an agitator that allows a continuous circulation of the mixture. Due to the temperature and stirring, the epoxy resin dissolves faster, which can significantly reduce process costs in terms of time and energy. The resulting product comprises, besides the remainder of the shredded component 4, 7, 8, the dissolved and precipitated epoxy resin solution and probably superfluous acidic aqueous liquid.

The acidic aqueous liquid can preferably comprise an acid and is heated at a temperature in a range of from 30°C to 100°C, preferably from 70°C to 100°C and/or for a period of from 0.1 h to 10 h, preferably from 1 h to 10 h. The acid can preferably comprise at least one selected from the group consisting of acetic acid, lactic acid, citric acid, oxalic acid and tartaric acid. Step S3 can comprise mixing, stirring and cracking so that the epoxy resin is readily dissolved and precipitated.

In the following step S31, the remainder of the component 4, 7, 8 is filtered to separate the remainder of the shredded component 4, 7, 8, which is a conventional thermoplastic, from the epoxy resin solution. In more detail, after the epoxy resin has been dissolved, the entire reactor contents can be filtered to separate the solid components of the auxiliaries (thermoplastics) from the solution. The solution is transferred to another reactor for further treatment. The thermoplastic solids can be cleaned with water and then dried. After drying, the thermoplastics are separated by air flow, for example, to recycle the thermoplastics by type, such as the production of new infusion auxiliaries in step a S4. In the step S4, the remainder of the component 4, 7, 8 is generally used as a recycled material.

The step S31 is optional. It is conceivable that the epoxy resin and auxiliaries could be dissolved in acetic acid in step S3 if all materials could be dissolved in the acid. This eliminates the need to separate conventional thermoplastics as described in step S31, making the process simpler and more cost-effective.

In a step S5, after at least partly dissolving and precipitating the epoxy resin, the acidic aqueous liquid is neutralized, where residual thermoplastics based on epoxy resin are separated therefrom. The solution can be processed using different processes. Examples include evaporation of acetic acid and recycling, neutralizing the solution with potassium hydroxide (KaOH) and precipitating the resulting salt, or by means of a centrifuge. The cured epoxy resin (thermoset) is split by the acid at the specific points of the hardener (cleavage points), and a thermoplastic is formed from the original thermoset.

The residual thermoplastics (residual) from the cracked epoxy resin can undergo an aftertreatment in a step S6 to obtain residual based thermoplastics, for example by cleaning and drying, which can be followed by at least one of granulating and packing in a step S7, and they can be reused in a step S8, for example for a component of the device for vacuum infusion molding for producing a wind turbine blade or a component thereof, in particular one of a an infusion distribution mesh 4, an infusion resin inlet 7, a vacuum plug 8, an infusion channel 9, a spiral hose 10, a tube adaptor 11, a line connector 12, a profile 13, and a vacuum line.

In the step S6, the residual material can be processed, for example, in such a way that its material properties are positively influenced and that it is further processed into a granulate. The residual thermoplastic has several properties that distinguish it from conventional thermoplastics:
- The original epoxy resin, with its thermoset properties (non-meltable, non-deformable), has become a material with thermoplastic properties (meltable, flexible).
- The thermoplastic has end groups (-OH) on its surface that are chemically reactive and affine to epoxy resins. This makes it special because, unlike conventional thermoplastics, it can be used in fibre composite components without negatively affecting the mechanical and dynamic properties, as it can react with the epoxy resin matrix.
- The thermoplastic can be dissolved in acetic acid and recycled again.

In the step S8, due to its thermoplastic properties, the residual thermoplastics from steps S6 and S7 can be used as an alternative to conventional thermoplastics to produce the auxiliary materials necessary to produce fibre composite components, such as resin distribution channels, the distribution mesh 4, etc.

The resulting product of step S5 are the neutralized solution and the after-treated residual thermoplastics from cracked epoxy resin. Also the neutralized solution can undergo an aftertreatment so that the after-treated solution can be added to the acidic solution obtained from the filtering step S31.

In an embodiment, the step S3 of contacting the shredded contaminated component 4, 7, 8 with a heated, acidic aqueous liquid for a predetermined period of time can comprise placing the shredded contaminated component 4, 7, 8 in a bath of the acidic aqueous liquid. Alternatively, the shredded contaminated component 4, 7, 8 to be recycled may also be sprayed or contacted in another way with the acidic aqueous liquid comprising an acid.

In an embodiment, the acidic aqueous liquid has a pH value of less than 7, in particular of less than 6, in particular of less than 5, in particular of less than 4. Moreover, the acidic aqueous liquid may have a pH value of more than 0, in particular of more than 1.

In an embodiment, the acid is preferably an organic acid or a carboxylic acid, rather than a mineral acid. An organic acid or a carboxylic acid may not only be particularly suitable for adjusting an appropriate pH but may additionally also act as a solvent for the recyclate.

In an embodiment, the acid comprises a monocarboxylic acid, a dicarboxylic acid, a tricarboxylic acid and/or a polycarboxylic acid, in particular selected from the group consisting of acetic acid, lactic acid, citric acid, oxalic acid and tartaric acid. Combinations of two or more of these acids are suitable as well. In particular, the acid may comprise acetic acid, which has proven particularly suitable.

In an embodiment, the shredded contaminated component 4, 7, 8 to be recycled is contacted with an acidic aqueous liquid comprising an acid (e.g. 20 to 30% acetic acid) at a temperature in a range of from 30°C to 100°C, preferably from 70°C to 100°C, more preferred from 80°C to 90°C, and/or for a period of from 0.1 h to 10 h, preferably from 1 h to 10 h, more preferred from 3 h to 6 h. These parameters provide that the epoxy resin is well dissolved and precipitated from a remainder of the shredded component 4, 7, 8.

In an embodiment, the shredded contaminated component 4, 7, 8 to be recycled comprises a resin containing a cleavable functional group, in particular at least one of an acetal and a ketal functional group. As a result of the contacting step S3, at least components of the cleavable functional groups of the resin of the shredded contaminated component 4, 7, 8 are cleaved such that the cleaved resin gets (becomes) dissolved in the acidic aqueous liquid. Simultaneously, the shredded contaminated component 4, 7, 8 can be made of compound having a chemical structure which dissolves in the acidic aqueous liquid and may form a substantially homogenous blend or mixture with the cleaved resin enabling a recovery of the compound.

The recycled material can substantially have thermoplastic properties. The recycled material can comprise at least one epoxy-functional group and/or is compatible with at least one epoxy-functional group. When the recycled material substantially has the thermoplastic properties, it can be well used in a further recycling stage.

In case the contaminated component is a part of the blade, the blade can be disassembled in step S1 and shredded in step S2. Disassembling the blade can be carried out by using large diamond saws or hydraulic tools that cut the blades into pieces or water jet cutting. Metal parts can be removed. The blades can also be decomposed without regard to individual components, e.g., the beams (which are now mainly made of carbon fibre), foam- or balsa segments. Alternatively, the blades can be disassembled by taking the material into account. It can also be necessary to break the component down into smaller fractions because a blade cannot be shredded due to its size and weight.

Except for blades with carbon fibre components, the blade consists for the most part only of glass fibres, carbon fibres balsa wood, PU or PET foam, epoxy resin, paint, adhesives, and fillers. The individual parts can be shredded in step S2 in several steps until a fraction size of < 1 cm is reached, for example.

In step S3, the shredded material is poured into a reactor, to which thirty percentage acetic acid is added. The reactor can be heated and is equipped with an agitator that allows a constant circulation of the mixture. Due to the temperature and stirring, the epoxy resin dissolves more quickly, which can significantly reduce process costs in terms of time and energy.

After the epoxy resin has been dissolved, the entire reactor content is filtered in step S31 to be able to separate the solid components from the solution, i.e., where a separation of dissolved epoxy resin and solids takes place. The solution is then transferred to another reactor for further treatment.

In contrast to the above-described components 4, 7, 8 of the device for vacuum infusion molding, the resulting products in the recycling of the blade component are no longer just thermoplastic solids but can be a mixture of glass and carbon fibres with a length < 1 cm, shredded foam (PU and/or PET), shredded balsa wood, surface fillers (for example epoxy based), paint remnants, and possible thermoplastics. Further processing of the epoxy resin-containing solution is analogous to steps S6 to S8.

As stated above, the residual thermoplastic obtained by epoxy resin recycling can be used for components 4, 7, 8 of the device for vacuum infusion molding such as resin distribution channels, the resin distribution mesh 4, etc. which are needed for the infusion of the blade. However, the use of residual thermoplastic is also be extended to the blade itself as described above. Some regions in the blade are so narrow in the direction of the tip that it is no longer allowed to enter them due to Health-, Safety-, and Environment- (HSE) restrictions. In these regions, the resin distribution mesh 4 remains in the blade after the casting process is finished. So far, this mesh 4 has been made of conventional thermoplastics. A substitution of conventional thermoplastic (PE, PP) with residual thermoplastics could have the advantage that the mesh 4 could be dissolved during recycling and reused as described above.

It is conceivable to replace the conventional epoxy-based surface filler in the blade with the residual thermoplastic. After appropriate surface pre-treatment, the residual thermoplastic would be molten and applied to the blade surface using suitable application techniques. The main advantages here are that, in contrast to the epoxy-based filler, the residual thermoplastic can also be recycled during production, thus significantly reduces the generated production waste. A further advantage is that the filler could be dissolved together with the remaining auxiliaries in acetic acid after shredding a blade and could be recycled afterwards as described above.

In addition, there are considerations to use the residual thermoplastic in the field of structural components in the blade in such a way that it could be used to positively influence the resin flow during infusion. Thermoplastics used so far do not allow this option, as they could cause a reduction in the dynamic strengths of the component due to lack of compatibility with the epoxy resin matrix. Due to its epoxy-functional groups and its compatibility with epoxy-functional groups in epoxy resin and the associated connection with the matrix, residual thermoplastics seem to have a much lower negative influence on component strength properties than conventional thermoplastics.

Fig. 3 shows examples of components 4, 7, 8 of a device for vacuum infusion molding, which can be recycled. For example, the recycled material can be used for a part of a device for vacuum infusion molding for producing a wind turbine blade or a part thereof, in particular one of the infusion distribution mesh 4, the infusion resin inlet 7, the vacuum plug 8, an infusion channel 9, a spiral hose 10 (which for example are used as spiral wrap for the resin inlet 7 and /or the vacuum plug 8), a tube adaptor 11, a line connector 12, a profile 13 (for example an omega-profile as shown in Fig. 3), a vacuum line connected to the vacuum plug 8, and a vacuum line connected to the resin inlet 7. The component can also be a part of the blade itself.

The recycled material can also be used for one of fiber spinning, extruding of channels or profiles, 3D-printing, and casting a flow mesh, for example the infusion distribution mesh 4. These manufacturing processes allow manufacturing any shape of part for any purpose. Especially the spinned fibers can be used as a yarn for an infusion distribution mesh 4.

**Fig. 4** shows a graph of an expected demand 61 for residuals to produce components of a device for vacuum infusion molding and an amount 62 of residual thermoplastic from epoxy recycling. The present invention residues not only in a recycling process where materials need to be separated from each other, furthermore it is full recycling process which can offer new opportunities. The demand 61 for residuals to produce components of a device for vacuum infusion molding 61 will be higher at the integration start than the available amount 62 of residual thermoplastic from epoxy recycling. That will change (after a not to be specified period) where the available amount 62 of residual thermoplastic from epoxy recycling will be higher than the demand for it, i.e., the demand 61 for residuals to produce parts of a device for vacuum infusion molding. This left over could be used/sold for other demands and/or industrial applications - especially when the sustainability aspect will be a growing demand in other industrial fields. It is obvious that the CO₂-footprint could be rigorous decreased when the production waste could be reduced and is not being incinerated. It is self-evident that all CO2 emissions could be eliminated but they could be decimated. In addition, it is clearly shown that the running costs can be remarkably reduced by the present invention.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

Independent of the grammatical term usage, individuals with male, female or other gender identities are included within the term.

## Claims

1. A method of recycling a component (4, 7, 8) involved in producing a wind turbine blade or a component thereof by vacuum infusion molding, wherein the component (4, 7, 8) has been contaminated with an epoxy resin during the vacuum infusion molding, the method comprising a recycling stage with steps of:
separating (S1) the component (3, 4, 5, 6, 7, 8) from a plurality of components involved in the manufacture of the blade of a wind turbine, wherein the separated component (3, 4, 5, 6, 7, 8) is or comprises a recyclable thermoplastic or recyclable thermoset;
shredding (S2) the separated contaminated component (4, 7, 8);
contacting (S3) the shredded contaminated component (4, 7, 8) with a heated, acidic aqueous liquid for a predetermined period of time, so that the epoxy resin is at least partly dissolved and precipitated from a remainder of the shredded component (4, 7, 8); and
using (S4) the remainder of the component (4, 7, 8) as a recycled material.

2. The method according to the preceding claim, wherein
after the step (S3) of contacting the shredded contaminated component (4, 7, 8) with the heated, acidic aqueous liquid, the remainder of the component (4, 7, 8) is filtered (S31) to separate the remainder of the component (4, 7, 8), in particular thermoplastic components, and an acidic epoxy resin solution.

3. The method according to any one of the preceding claims, wherein
after at least partly dissolving and precipitating the epoxy resin, the resulting acidic aqueous liquid is neutralized (S5) and residual thermoplastics from cracked epoxy resin are removed, and the neutralized solution undergoes an aftertreatment, wherein the after-treated solution is preferably added to the acidic solution obtained from the filtering step (S31).

4. The method according to any one of the preceding claims, wherein
the remainder of the component (4, 7, 8) or the residual thermoplastics obtained from the neutralization step (S5) undergo at least one of an aftertreatment (S6), a granulating with packing (S7), and a reusing (S8).

5. The method according to any one of the preceding claims, wherein
the acidic aqueous liquid comprises an acid and is heated at a temperature in a range of from 30°C to 100°C, preferably from 70°C to 100°C and/or for a period of from 0.1 h to 10 h, preferably from 1 h to 10 h, wherein the acid comprises at least one selected from the group consisting of acetic acid, lactic acid, citric acid, oxalic acid and tartaric acid.

6. The method according to any one of the preceding claims, wherein
the contaminated component (4, 7, 8) is one of an infusion distribution mesh (4), an infusion resin inlet (7), a vacuum plug (8), an infusion channel (9), a spiral hose (10), a tube adaptor (11), a line connector (12), a profile (13), a vacuum line, and a part of the blade.

7. The method according to any one of the preceding claims, wherein
the recycled material is used for a component of a device for vacuum infusion molding for producing a wind turbine blade or a component thereof, in particular one of a release fabric (3), an infusion distribution mesh (4), a vacuum foil (5), a sealing tape (6), an infusion resin inlet (7), a vacuum plug (8), an infusion channel (9), a spiral hose (10), a tube adaptor (11), a line connector (12), a profile (13), a vacuum line, or for at least a part of a blade.

8. The method according to any one of the preceding claims, wherein
the recycled material is used for one of fiber spinning, extruding of channels or profiles, 3D-printing, and casting a flow mesh, preferably an infusion distribution mesh (4).

9. The method according to any one of the preceding claims, wherein
the recycled material comprises at least one epoxy-functional group and/or is compatible with at least one epoxy-functional group.
